# EUROPÄISCHE PATENTANMELDUNG

(11) **EP 4 588 366 A1**
(43) Veröffentlichungstag der Anmeldung: **23.07.2025**
(21) Anmeldenummer: 25150161.5
(22) Anmeldetag: 03.01.2025
(51) Int. Cl.: A23N 1/00, A23N 1/02, A47J 19/02

(54) **FRUCHTPRESSE**

(30) Priorität: 22.01.2024 AT 500352024
(71) Anmelder: Citrocasa GmbH, 4020 Linz (AT)
(72) Erfinder: Huber, Johannes, 4225 Luftenberg (AT)
(74) Vertreter: Hübscher & Partner Patentanwälte GmbH

(57) **Zusammenfassung**

Es wird eine Fruchtpresse für Schalenfrüchte mit auf gegensinnig antreibbaren Wellen (2) eines Gestells (1) aufsteckbaren Presswerkzeugen (3), die einerseits zwei beidseits eines Messers (9) angeordnete Presswalzen (4) und anderseits zwei unterhalb der Presswalzen (4) vorgesehene Stempelköpfe (5) mit in Pressausnehmungen (6) der Presswalzen (4) eingreifenden Pressstempeln (7) umfassen, mit einem gemeinsamen Träger (12) zugeordneten axialen Anschlägen (11), die unter einer federnden Vorspannung an Anschlagflächen (31) der aufgesteckten Presswerkzeuge (3) anliegen, und mit wenigstens einem im Gestell (1) gehaltenen, eine Messerhalterung (8) und den Träger (12) durchsetzenden Zuganker (13) zur axialen Abstützung des Trägers (12) beschrieben. Um vorteilhafte Handhabungsbedingungen zu schaffen, wird vorgeschlagen, dass ein auf der der Messerhalterung (8) abgewandten Seite am Träger (13) gelagerter Spannhebel (18) vorgesehen ist, der mit einer Lagerachse (22) in eine trägerseitige, quer zum Zuganker (13) verlaufende Verschiebeführung (21) und mit einer Spannachse (24) in eine auf der vom Träger (12) abgewandten Seite der Verschiebeführung (21) vorgesehene, gegen den Träger (12) offene Lagerausnehmung (23) des Zugankers (12) eingreift, deren Abstand von der Verschiebeführung (21) kleiner als der Abstand der Lagerachse (22) von der Spannachse (24) ist.

## Beschreibung

Die Erfindung bezieht sich auf eine Fruchtpresse für Schalenfrüchte mit auf gegensinnig antreibbaren Wellen eines Gestells aufsteckbaren Presswerkzeugen, die einerseits zwei beidseits eines Messers angeordnete Presswalzen und anderseits zwei unterhalb der Presswalzen vorgesehene Stempelköpfe mit in Pressausnehmungen der Presswalzen eingreifenden Pressstempeln umfassen, mit einem gemeinsamen Träger zugeordneten axialen Anschlägen, die unter einer federnden Vorspannung an Anschlagflächen der aufgesteckten Presswerkzeuge anliegen, und mit wenigstens einem im Gestell gehaltenen, eine Messerhalterung und den Träger durchsetzenden Zuganker zur axialen Abstützung des Trägers.

Zum Auspressen von Schalenfrüchten, insbesondere Orangen, ist es bekannt (AT 508944 A1, EP 2412252 B1, EP 2314174 B1), die Schalenfrüchte in den Zwickelbereich zwischen zwei Presswalzen zu fördern, wo sie in Pressausnehmungen aufgenommen und mit Hilfe eines von unten zwischen die Presswalzen hochgehobenen Messers halbiert werden, bevor die Fruchthälften in den Pressausnehmungen durch Pressstempel ausgepresst werden, die auf unterhalb der Presswalzen gelagerten, synchron mit den Presswalzen angetriebenen Stempelköpfen angeordnet sind. Diese Presswerkzeuge sind auf parallelen, konischen Mehrkantwellen lösbar aufgeschoben und werden jeweils auf ihren zugehörigen, in einem gemeinsamen Gestell gelagerten Wellen durch axiale Anschläge gesichert, die durch einen gemeinsamen Träger gebildet werden. Zur Befestigung des Trägers ist ein im Gestell zugfest gehaltener Zuganker vorgesehen, der die Messerhalterung und den Träger mit einem Gewindeabschnitt durchsetzt, sodass der Träger mithilfe einer Befestigungsmutter entlang des Zugankers verlagerbar und dadurch die als gummielastische Druckkörper ausgebildeten Anschläge unter einer elastischen Vorspannung an die Presswerkzeuge anstellbar sind. Zufolge dieser Maßnahmen bedarf es zum Abziehen der Presswerkzeuge von ihren Wellen zu Reinigungszwecken nur der Abnahme des Trägers. Nachteilig ist allerdings, dass die Beaufschlagung der gummielastischen Druckkörper mit einer entsprechenden federnden Vorspannung vom Anziehmoment der Befestigungsschraube und damit von der Sorgfalt abhängt, mit der die Presswerkzeuge nach der Reinigung wieder auf ihre Wellen aufgesteckt und mithilfe des gemeinsamen Trägers axial gesichert werden.

Um die zwischen einer vorderen Halterung und einer Rückwand einer Handhabungseinheit gehaltenen Presswerkzeuge auf ihren konischen Wellen axial zu sichern, ist es auch bekannt (WO 2020/198773 A1, US 11766063 B2, US 11089807 B2), die vordere Halterung als Anschlag für axiale Stützansätze der Presswalzen und Stempelköpfe zu nützen, sodass mit dem Befestigen der Handhabungseinheit an einem die konischen Wellen aufweisenden Gestell die mit der Handhabungseinheit auf die konischen Wellen aufgeschobenen Presswerkzeuge durch die Handhabungseinheit axial gesichert werden, allerdings ohne federnde Vorspannung. Dies gilt auch für eine andere bekannte Ausführungsform (CN 211459748 U), bei der die axiale Sicherung der Presswerkzeuge auf ihren konischen Wellen durch einen gemeinsamen, mehrarmigen Träger erfolgt, der mithilfe eines Gewindebolzens an einem die konischen Wellen aufweisenden Gestells festschraubbar ist und dabei die Presswerkzeuge durch in den Armen vorgesehene, in entsprechende Aufnahmen der Presswerkzeuge eingreifende Kugellager axial sichert.

Der Erfindung liegt somit die Aufgabe zugrunde, eine einfach handhabbare Abzugssicherung zu schaffen, die eine vorgegebene federnde Vorspannung sicherstellt, mit der die Anschläge des gemeinsamen Trägers an die Anschlagflächen der Presswerkzeuge angedrückt werden können.

Ausgehend von einer Fruchtpresse der eingangs geschilderten Art löst die Erfindung die gestellte Aufgabe dadurch, dass ein auf der der Messerhalterung abgewandten Seite am Träger gelagerter Spannhebel vorgesehen ist, der mit einer Lagerachse in eine trägerseitige, quer zum Zuganker verlaufende Verschiebeführung und mit einer Spannachse in eine auf der vom Träger abgewandten Seite der Verschiebeführung vorgesehene, gegen den Träger offene Lagerausnehmung des Zugankers eingreift, deren Abstand von der Verschiebeführung kleiner als der Abstand der Lagerachse von der Spannachse ist.

Bei einer Betätigung des Spannhebels wird zunächst dessen Spannachse in die gegen den Träger offene Lagerausnehmung im Zuganker eingeführt, bevor der Spannhebel aufgrund der konstruktiven Vorgaben um die in die Lagerausnehmung eingreifende Spannachse gedreht und zugleich die Lagerachse entlang der Verschiebeführung mit der Wirkung verlagert wird, dass sich der Abstand zwischen der Verschiebeführung und der Lagerausnehmung im Zuganker vergrößert. Diese von der Drehbewegung des Spannhebels zwischen einer Ausgangsstellung und einer Spannstellung abhängige Verlagerung des Trägers gegenüber dem Zuganker kann vorteilhaft für die Beaufschlagung der axialen Anschläge mit einer vorgegebenen federnden Vorspannung genützt werden. Durch den beim Verschwenken des Spannhebels konstruktionsbedingt zurückgelegten Weg des Trägers gegenüber dem Zuganker kann somit der für eine bestimmte Vorspannung erforderliche Federweg festgelegt werden.

Zur Beaufschlagung des Trägers mit einer federnden Vorspannung könnte der Zuganker durch eine Druckfeder gegenüber dem Gestell abgestützt werden, mit deren beim Spannen des Spannhebels wirksamen Vorspannung der Träger beaufschlagt wird. Einfachere Konstruktionsbedingungen ergeben sich jedoch, wenn der an den Anschlagflächen der Presswerkzeuge abgestützte Träger durch den Spannhebel mit einer Biegespannung zur federnden Vorspannung der Anschläge beaufschlagbar ist, weil in diesem Fall der Träger selbst als vorspannbare Feder genützt werden kann. Außerdem kann der Zuganker für das Spannen des Spannhebels zugfest im Gestell abgestützt werden.

Besonders günstige Federeigenschaften können dabei mit einem Träger in Form einer die Anschläge bildenden Trägerplatte erreicht werden. Zur entsprechenden Durchbiegung der Trägerplatte müssen die Anschlagflächen der auf den Wellen aufgeschobenen Presswerkzeuge gegenüber der Stirnfläche der Messerhalterung zumindest entsprechend dem durch den Spannhebel vorgegebenen Federweg axial vorstehen.

Um einfache Montagebedingungen zu schaffen, kann die langlochartige Verschiebeführung auf der Seite der Lagerausnehmung des Zugankers ein offenes Einführende für die Lagerachse des Spannhebels aufweisen, sodass der Spannhebel in einer Montagestellung, in der die Verbindungsgerade zwischen der Lagerachse und der Spannachse vorzugsweise quer zum Zuganker und damit zumindest angenähert in Richtung der Verschiebeführung verläuft, mit der Lagerachse in die Verschiebeführung eingeschoben werden kann, bevor der Spannhebel zum Einführen der Spannachse in die Lagerausnehmung des Zugankers um die vorzugsweise am Ende der Verschiebeführung anliegende Lagerachse gedreht wird. Wird der Spannhebel mit der in die Lagerausnehmung des Zugankers eingreifenden Spannachse um diese Spannachse als Drehachse weitergedreht, so wird der Abstand zwischen der trägerseitigen Verschiebeführung und dem Zuganker zum Vorspannen der Anschläge für die Presswerkzeuge entsprechend vergrößert.

Zur sicheren Einführung der Spannachse des Spannhebels in die Lagerausnehmung des Zugankers kann eine Leitwand vorgesehen werden, die an das offene Einführende der Verschiebeführung anschließt und eine der Lagerausnehmung des Zugankers vorgeordnete Einführbahn für die Spannachse begrenzt.

Damit der Spannhebel in der Spannstellung selbständig gesichert wird, kann zusätzlich vorgesehen werden, dass die Lagerachse mit seitlichem Führungsspiel in die Verschiebeführung eingreift, dass der Spannhebel zwei mit dem Träger zusammenwirkende Anschlagflächen einerseits für eine Ausgangsstellung und anderseits für eine Spannstellung sowie eine auf die Lagerachse bezogene Nockenbahn zwischen den beiden Anschlagflächen bildet und dass die Nockenbahn einen Nockenhub im Rahmen des Führungsspiels der Lagerachse aufweist. Aufgrund der Nockenbahn vergrößert sich der Spannweg des Spannhebels mit der Wirkung, dass die Anschlagfläche für die Spannstellung des Spannhebels unter einer entsprechenden Vorspannung an den Träger angedrückt wird und dadurch den Spannhebel in seiner Spannstellung hält. Um den Nockenhub der Nockenbahn nützen zu können, muss die in der Verschiebeführung gehaltene Lagerachse diesen Nockenhub zulassen, was ein diesem Nockenhub entsprechendes seitliches Führungsspiel der Lagerachse in der Verschiebeführung erfordert. Die Ausgangsstellung des Spannhebels entspricht vorzugsweise seiner Montagestellung, die somit durch die der Ausgangsstellung zugehörige Anschlagfläche bestimmt wird.

Um mithilfe eines Sensors überprüfen zu können, ob der Spannhebel zur axialen Sicherung der auf den Wellen aufgesteckten Presswerkzeuge betätigt wurde, kann der Zuganker beim Betätigen des Spannhebels aus einer anschlagbegrenzten Ausgangsstellung, in der die Spannachse in die Lagerausnehmung des Zugankers ohne Verlagerung des Zugankers eingreift, gegen die Kraft einer Rückstellfeder in eine anschlagbegrenzte Arbeitsstellung axial ausgezogen werden. Der Stellweg des Zugankers zwischen seiner Ausgangsstellung und der Arbeitsstellung kann für das Ansprechen des Sensors genützt werden, ohne durch diesen Stellweg Einfluss auf das Spannen des Spannhebels zunehmen. Unter der Voraussetzung, dass die Kräfte der Rückstellfeder kleiner als die Vorspannkräfte für die Anschläge zur axialen Sicherung der auf den Wellen aufgesteckten Presswerkzeuge sind, wird der Zuganker zunächst lediglich in die Arbeitsstellung axial verlagert, in der er gegenüber dem Gestell zugfest abgestützt ist, bevor die Vorspannung für die Anschläge aufgebracht werden kann.

Der gegenüber dem Träger vorzugsweise lose Spannhebel erleichtert die Reinigung, erschwert jedoch die Handhabung. Um die Handhabung zu verbessern, kann der Spannhebel einen lösbaren, mit einem eine Ausgangsstellung des Spannhebels begrenzenden, trägerseitigen Schwenkanschlag zusammenwirkenden Riegel aufweisen. In der Sperrstellung des Riegels wird verhindert, dass der Spannhebel über den Schwenkanschlag hinaus in eine Freigabestellung verschwenkt wird, die das Lösen des Spannhebels aus der Verschiebeführung erlaubt. In der Sperrstellung des Riegels bildet somit der Träger mit dem Spannhebel eine Handhabungseinheit.

Werden zwei Zuganker beidseits des Messers vorgesehen, können symmetrische Belastungsverhältnisse sichergestellt werden, ohne eine hinsichtlich der Funktion des Spannhebels aufwendigere Konstruktion in Kauf nehmen zu müssen, weil der Spannhebel eine für ein Zusammenwirken mit den Lagerausnehmungen der beiden Zuganker gemeinsame Spannachse aufweisen kann.

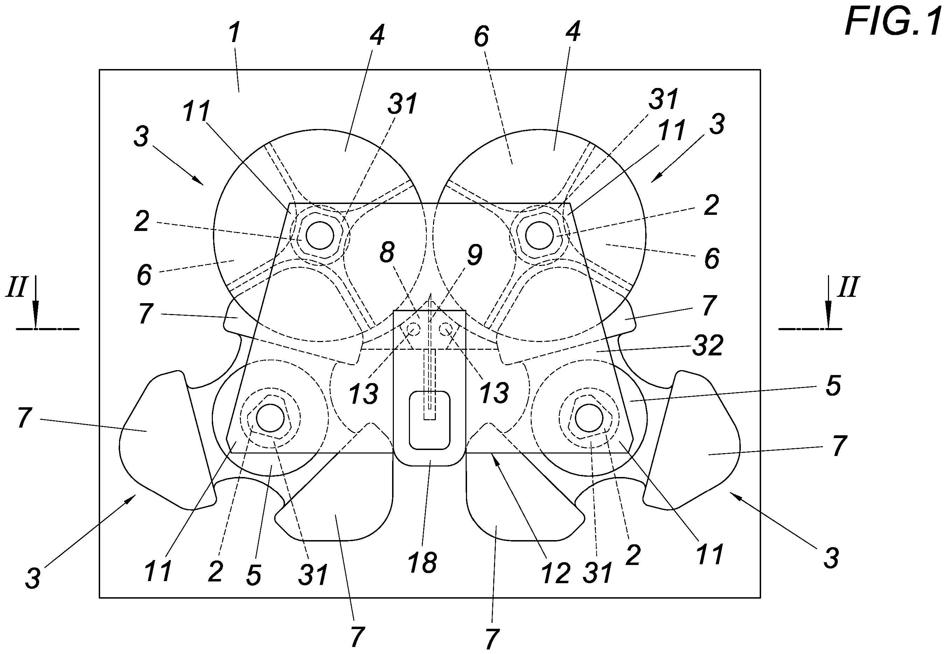

In der Zeichnung ist der Erfindungsgegenstand beispielsweise dargestellt. Es zeigen
- Fig. 1: eine erfindungsgemäße Fruchtpresse ausschnittsweise in einer stirnseitigen Ansicht der Presswerkzeuge,

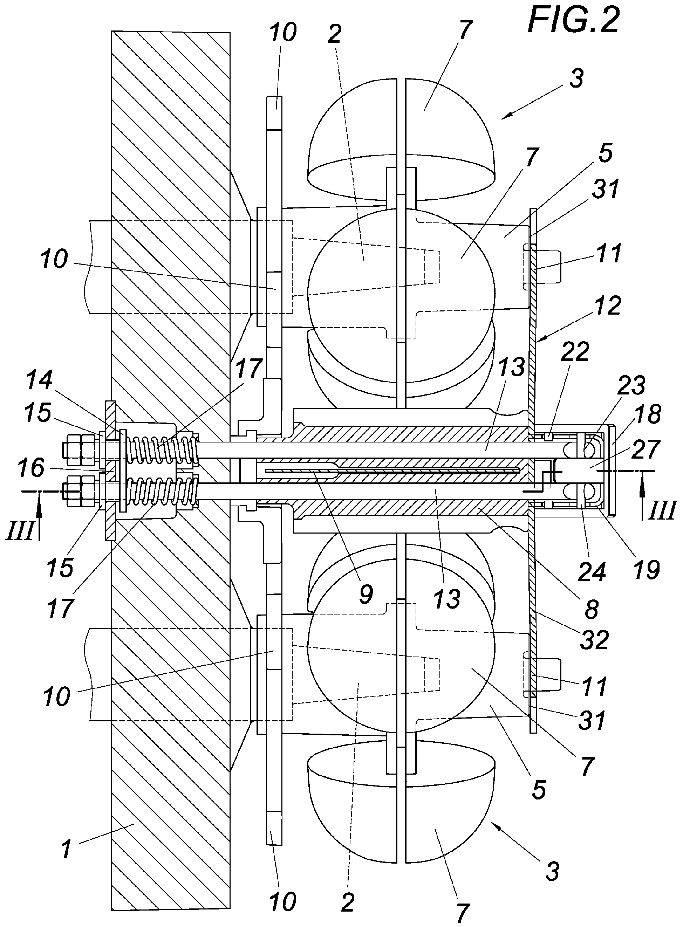

- Fig. 2: einen Schnitt nach der Linie II-II der Fig. 1 in einem größeren Maßstab, die
- Fig. 3: bis 5 verschiedene Stellungen des Spannhebels in einem Schnitt entsprechend der Linie III-III der Fig. 2 in einem größeren Maßstab und
- Fig. 6: einen Schnitt nach der Linie VI-VI der Fig. 5 in einem größeren Maßstab.

Eine erfindungsgemäße Fruchtpresse weist in herkömmlicher Weise ein Gestell 1 mit auskragenden Wellen 2 für Presswerkzeuge 3 auf, nämlich zwei Presswalzen 4 und zwei mit den Presswalzen 4 zusammenwirkende Stempelköpfe 5. Die Presswalzen 4 sind mit Pressausnehmungen 6 versehen, die mit Pressstempeln 7 der Stempelköpfe 5 zusammenwirken. Im Zwickelbereich zwischen den Presswalzen 4 ist ein in einer Messerhalterung 8 verschiebbar gelagertes Messer 9 vorgesehen, das mithilfe von den Stempelköpfen 5 zugeordneten Mitnehmernocken 10 für den Schnitthub beaufschlagt wird. Die auszupressenden Schalenfrüchte werden über einen nicht dargestellten Beschickungskanal von oben in den Zwickelbereich zwischen den Presswalzen 4 gefördert und von den Pressausnehmungen 6 aufgenommen, um entgegen dem angehobenen Messer 9 nach unten gefördert zu werden. Da beim Weiterdrehen der Presswalzen 4 die Pressstempel 7 der Stempelköpfe 5 in die Pressausnehmungen 6 eindringen, werden die von den Pressausnehmungen 6 aufgenommenen Fruchthälften durch die Pressstempel 7 ausgepresst. Die verbleibenden Schalenhälften mit den Fruchtresten bleiben an den Pressstempeln 7 haften und werden mit den Pressstempeln 7 aus den Pressausnehmungen 6 der Presswalzen 4 ausgetragen, um anschließend von den Pressstempeln 7 abgestreift und einem Sammelbehälter zugeführt zu werden.

Um die auf den als Mehrkantwellen ausgebildeten, konischen Wellen 2 aufgeschobenen Presswerkzeuge 3 gegen ein axiales Abziehen zu sichern, sind für die Presswerkzeuge 3 axiale Anschläge 11 vorgesehen, die einem gemeinsamen Träger 12 zugeordnet und vorzugsweise durch diesen Träger 12 gebildet werden. Zur Verbindung des Trägers 12 mit dem Gestell 1 ist zumindest ein Zuganker 13 vorgesehen, der die Messerhalterung 8 sowie den Träger 12 durchsetzt. Gemäß dem Ausführungsbeispiel sind zwei Zuganker 13 beidseits des Messers 9 angeordnet. Diese Zuganker 13 sind im Gestell 1 anschlagbegrenzt axial verschiebbar gelagert und zu diesem Zweck mit zwei Anschlägen 14, 15 beidseits einer Anschlagplatte 16 versehen. Mithilfe von Rückstellfedern 17 werden die Zuganker 13 in einer durch den Anschlag 14 bestimmten Ausgangsstellung gehalten, aus der sie gegen die Kraft der Rückstellfedern 17 in eine durch den Anschlag 15 vorgegebene Arbeitsstellung verschoben werden können, in der sie zugfest gegenüber dem Gestell 1 abgestützt sind.

An den Zugankern 13 greift ein Spannhebel 18 an, der in einem am Träger 12 vorgesehenen U-förmigen Lagerbügel 19 geführt wird. Zu diesem Zweck bilden die seitlichen Wangen 20 des Lagerbügels 19 quer zu den Zugankern 13 verlaufende Verschiebeführungen 21 für eine durch zwei Achsstummel gebildete Lagerachse 22 des den Lagerbügel 19 umgreifenden Spannhebels 18. Auf der vom Träger 12 abgewandten Seite der Verschiebeführung 21 sind die in den Lagerbügel 19 vorstehenden Enden der Zuganker 13 mit einer gegen den Träger 12 offenen Lagerausnehmung 23 für eine Spannachse 24 des Spannbügels 18 versehen, deren Abstand von dessen Lagerachse 22 größer als der Abstand der Spannachse 24 von der Verschiebeführung 21 ist.

Die Verschiebeführung 21 weist auf der Seite der Lagerausnehmungen 23 der Zuganker 13 ein offenes Einführende 25 für die Lagerachse 22 des Spannhebels 18 auf, an das eine den Lagerausnehmungen 23 der Zuganker 13 vorgeordnete, eine Einführbahn 26 für die Spannachse 24 begrenzende Leitwand 27 anschließt. Die Lagerachse 22 des Spannhebels 18 greift mit seitlichem Spiel in die Verschiebeführung 21 ein, das zumindest dem durch die Anschläge 14 und 15 bestimmten Verschiebeweg der Zuganker 13 zwischen ihrer Ausgangsstellung und ihrer Arbeitsstellung entspricht.

Der gegenüber dem Lagerbügel 19 lose Spannebel 18 weist zwei mit dem Träger 12 zusammenwirkende Anschlagflächen 28 und 29 einerseits für eine Montagestellung und anderseits für eine Spannstellung sowie eine auf die Lagerachse 22 bezogene Nockenbahn 30 zwischen den beiden Anschlagflächen 28, 29 auf, wobei die Nockenbahn 30 mit einem Nockenhub im Rahmen des Führungsspiels der Lagerachse 22 ausgebildet ist.

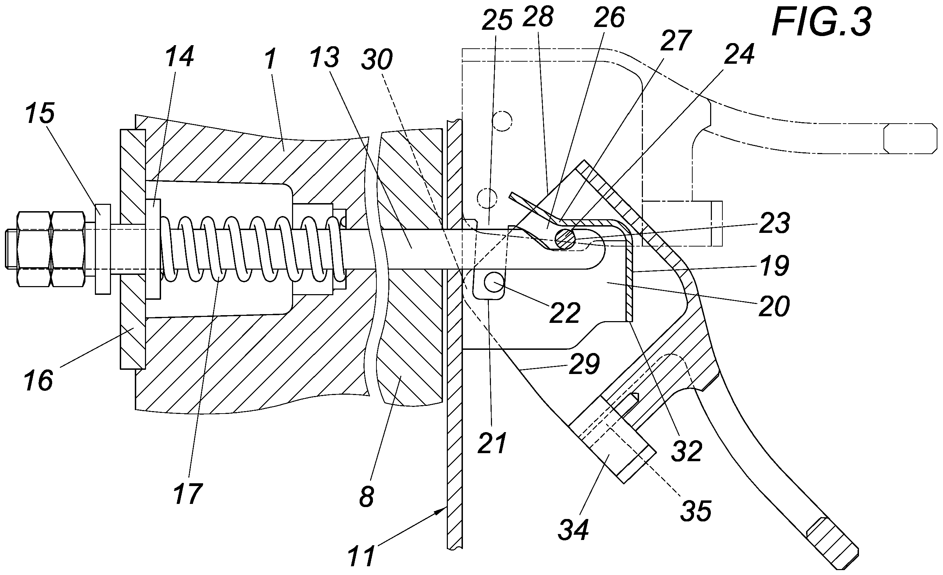

Zur Montage wird der vom Lagerbügel 19 gelöste Spannhebel 18 mit seiner Anschlagfläche 28 für die Montagestellung in einer den Lagerbügel 19 umgreifenden Stellung an den Träger 12 angelegt, wobei sich die Lagerachse 22 des Spannhebels 18 oberhalb des offenen Einführendes 25 der Verschiebeführung 21 befindet, wie dies in der Fig. 3 strichpunktiert dargestellt ist. Der Spannhebel 18 kann nunmehr entlang des Trägers 12 verschoben werden, bis die Lagerachse 22 am geschlossenen Ende der Verschiebeführung 21 anliegt und um die Lagerachse 22 gedreht werden kann, um die Spannachse 24 entlang der Einführbahn 26 in die Lagerausnehmungen 23 der nach dem Aufschieben des Trägers 12 über den Träger 12 vorstehenden Zuganker 13 gleiten zu lassen. In der in Fig. 3 mit vollen Linien gezeichneten Spannhebelstellung ist die Eingriffslage der Spannachse 24 in die Lagerausnehmungen 23 der Zuganker 13 vor einer Verlagerung der Zuganker 13 erreicht.

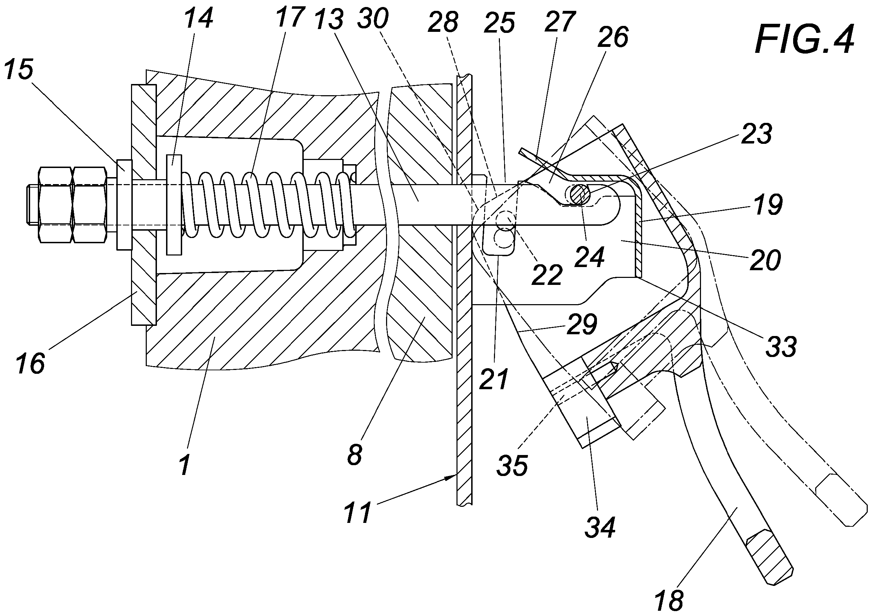

Bei einem Weiterdrehen des Spannhebels 18 aus dieser in der Fig. 4 strichpunktiert angedeuteten Stellung um die in den Lagerausnehmungen 23 festgehaltenen Spannachse 24, stützt sich der Spannhebel 18 mit der Nockenbahn 30 am Träger 12 mit der Wirkung ab, dass die Zuganker 13 aus der Ausgangsstellung nach der Fig. 3 gegen die Kraft der Rückstellfedern 17 in die Arbeitsstellung nach der Fig. 4 gezogen werden, die in der Fig. 4 mit vollen Linien eingezeichnet ist. Dieser in Bezug auf das Aufbringen einer entsprechenden federnden Vorspannung für die Anschläge 11 einen Leerhub ergebende Stellweg der Zuganker 13 wird zum Ansprechen eines üblichen Sensors genützt, der die ordnungsgemäße Betätigung des Spannhebels 18 anzeigt.

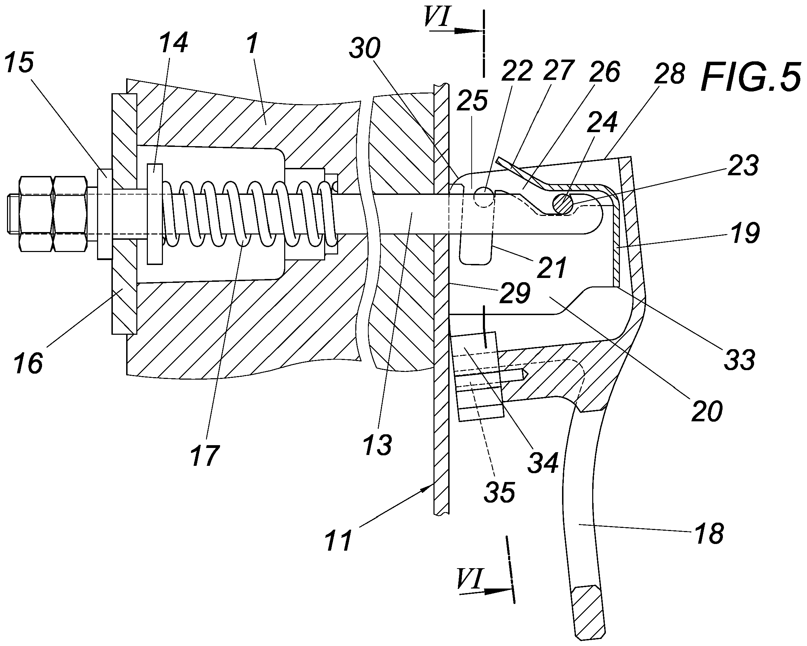

Zum vollständigen Spannen des Spannhebels 18 ist dieser bis zum Anschlag der Anschlagfläche 29 am Träger 12 gemäß der Fig. 5 weiterzudrehen, wobei sich der Abstand zwischen der Spannachse 24 und der Verschiebeführung vergrößert und daher der Träger 12 wegen der in der Arbeitsstellung zugfesten Abstützung der Zuganker 13 im Gehäuse 1 in Richtung der Messerhalterung 8 verlagert wird. Mit einem entsprechend biegeelastisch ausgebildeten Träger 12 werden somit die durch den Träger 12 gebildeten oder am Träger 12 vorgesehenen Anschläge 11 mit einer federnden Vorspannung beaufschlagt, um mit dieser federnden Vorspannung an Anschlagflächen 31 der Presswerkzeuge 3 angedrückt gehalten zu werden. Um vorteilhafte Federeigenschaften für den Träger12 bereitstellen zu können, kann der Träger 12 als die Anschläge 11 bildende Trägerplatte 32 ausgebildet werden.

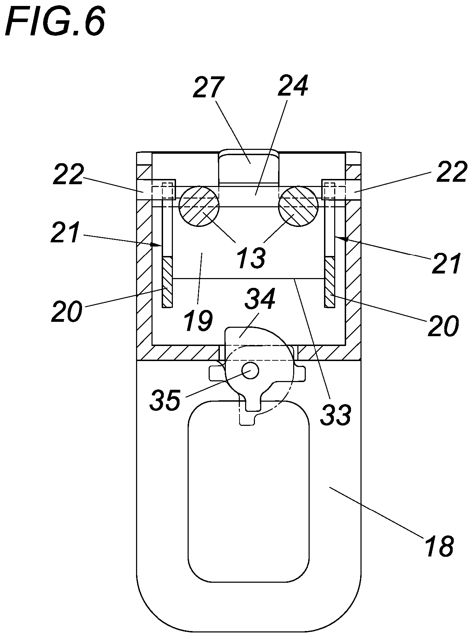

Zum Lösen des Trägers 12 ist der Spannhebel 18 aus der Spannstellung gemäß der Fig. 5 gegensinnig zu drehen, bis die Spannachse 24 aus den Lagerausnehmungen 23 der Zuganker 13 austritt und der Träger 12 abgezogen werden kann. Um dabei ein Lösen des Spannhebels18 vom Lagerbügel 19 zu unterbinden und damit die Handhabung zu vereinfachen, kann der Spannhebel 18 einen lösbaren, mit einem eine Ausgangsstellung des Spannhebels 18 begrenzenden, trägerseitigen Schwenkanschlag 33 zusammenwirkenden Riegel 34 aufweisen. Eine konstruktiv einfache Ausgestaltung ergibt sich, wenn der Riegel 34 als Drehriegel ausgestaltet ist, der um eine quer zur Anschlagfläche 29 verlaufende Achse 35 zwischen einer in der Fig. 6 mit vollen Linien gezeichneten Sperrstellung und einer strichpunktiert angedeuteten Freigabestellung drehverstellbar gelagert ist.

Da in den Fig. 3 und 4 die Montage und das Einleiten der Spannbewegung dargestellt sind, ist in den Fig. 3 und 4 der Riegel 34 in der Freigabestellung gezeichnet. Nach dem Spannen des Spannhebels 18 kann gemäß der Fig. 5 der Riegel 34 in die Sperrstellung verschwenkt werden.

## Patentansprüche

1. Fruchtpresse für Schalenfrüchte mit auf gegensinnig antreibbaren Wellen (2) eines Gestells (1) aufsteckbaren Presswerkzeugen (3), die einerseits zwei beidseits eines Messers (9) angeordnete Presswalzen (4) und anderseits zwei unterhalb der Presswalzen (4) vorgesehene Stempelköpfe (5) mit in Pressausnehmungen (6) der Presswalzen (4) eingreifenden Pressstempeln (7) umfassen, mit einem gemeinsamen Träger (12) zugeordneten axialen Anschlägen (11), die unter einer federnden Vorspannung an Anschlagflächen (31) der aufgesteckten Presswerkzeuge (3) anliegen, und mit wenigstens einem im Gestell (1) gehaltenen, eine Messerhalterung (8) und den Träger (12) durchsetzenden Zuganker (13) zur axialen Abstützung des Trägers (12), **dadurch gekennzeichnet, dass** ein auf der der Messerhalterung (8) abgewandten Seite am Träger (13) gelagerter Spannhebel (18) vorgesehen ist, der mit einer Lagerachse (22) in eine trägerseitige, quer zum Zuganker (13) verlaufende Verschiebeführung (21) und mit einer Spannachse (24) in eine auf der vom Träger (12) abgewandten Seite der Verschiebeführung (21) vorgesehene, gegen den Träger (12) offene Lagerausnehmung (23) des Zugankers (12) eingreift, deren Abstand von der Verschiebeführung (21) kleiner als der Abstand der Lagerachse (22) von der Spannachse (24) ist.

2. Fruchtpresse nach Anspruch 1, **dadurch gekennzeichnet, dass** der an den Anschlagflächen (31) der Presswerkzeuge (3) abgestützte Träger (12) durch den Spannhebel (18) mit einer Biegespannung zur federnden Vorspannung der Anschläge (11) beaufschlagbar ist.

3. Fruchtpresse nach Anspruch 2, **dadurch gekennzeichnet, dass** der Träger (12) als Trägerplatte (32) ausgebildet ist und dass die Anschlagflächen (31) der auf den Wellen (2) aufgeschobenen Presswerkzeuge (3) gegenüber der Stirnfläche der Messerhalterung (8) axial vorstehen.

4. Fruchtpresse nach einem der Ansprüche 1 bis 3, **dadurch gekennzeichnet, dass** die langlochartige Verschiebeführung (21) auf der Seite der Lagerausnehmung (23) des Zugankers (13) ein offenes Einführende (25) für die Lagerachse (22) des Spannhebels (18) aufweist.

5. Fruchtpresse nach Anspruch 4, **dadurch gekennzeichnet, dass** an das offene Einführende (25) der Verschiebeführung (21) eine der Lagerausnehmung (23) des Zugankers (13) vorgeordnete, eine Einführbahn (26) für die Spannachse (24) begrenzende Leitwand (27) anschließt.

6. Fruchtpresse nach einem der Ansprüche 1 bis 5, **dadurch gekennzeichnet, dass** die Lagerachse (22) mit seitlichem Führungsspiel in die Verschiebeführung (21) eingreift, dass der Spannhebel (18) zwei mit dem Träger (12) zusammenwirkende Anschlagflächen (28, 29) einerseits für eine Ausgangsstellung und anderseits für eine Spannstellung sowie eine auf die Lagerachse (22) bezogene Nockenbahn (30) zwischen den beiden Anschlagflächen (28, 29) bildet und dass die Nockenbahn (30) einen Nockenhub im Rahmen des Führungsspiels der Lagerachse (22) aufweist.

7. Fruchtpresse nach einem der Ansprüche 1 bis 6, **dadurch gekennzeichnet, dass** der Zuganker (13) beim Betätigen des Spannhebels (18) aus einer anschlagbegrenzten Ausgangsstellung, in der die Spannachse (24) in die Lagerausnehmung (23) des Zugankers (13) eingreift, gegen die Kraft einer Rückstellfeder (17) in eine anschlagbegrenzte Arbeitsstellung axial ausziehbar ist.

8. Fruchtpresse nach einem der Ansprüche 1 bis 7, **dadurch gekennzeichnet, dass** der Spannhebel (18) einen lösbaren, mit einem eine Ausgangsstellung des Spannhebels (18) begrenzenden, trägerseitigen Schwenkanschlag (33) zusammenwirkenden Riegel (34) aufweist.

9. Fruchtpresse nach einem der Ansprüche 1 bis 8, **dadurch gekennzeichnet, dass** zwei Zuganker (13) beidseits des Messers (9) vorgesehen sind.
